# EUROPEAN PATENT APPLICATION

(11) **EP 2 560 041 A2**
(43) Date of publication of application: **20.02.2013**
(21) Application number: 12180517.0
(22) Date of filing: 15.08.2012
(51) Int. Cl.: G02C 13/00

(54) **Device and method for measuring pantoscopic tilt**

(30) Priority: 16.08.2011 US 201113210642
(71) Applicant: Shamir Optical Industry, 12135 Upper Galilee (IL)
(72) Inventor: Katzman, Oded, 34987 Haifa (IL); Katzman, Dan, 36570 Givat Ela (IL)
(74) Representative: Dawson, Elizabeth Ann

(57) **Abstract**

A device and method for measuring the pantoscopic tilt of a lens installed in a frame, the device comprising an orientation sensor for measuring pantoscopic tilt and an attachment member to attach the device to a lens. The method comprises marking a center of the pupil on a lens while a patient is wearing the spectacles, attaching a measurement device at the marked center of the pupil point and while the device is attached to the lens, reading the pantoscopic tilt value from the device while the patient is wearing the spectacles in a natural position of the head for looking at the horizon.

## Description

### BACKGROUND OF THE INVENTION

People suffering from poor visual acuity often find relief by using vision correcting lenses. These may come in the form of corrective contact lenses or of corrective lenses fitted into spectacles. When spectacles are used, the spectacle frame may have one of several different sizes and/or shapes. The size and the shape of the spectacle frame affects the horizontal and vertical positioning of the optical lens relative to the eyes of the user, and also affects the panoramic and pantoscopic tilts (horizontal and vertical angles, respectively) of the lens.

In recent years many of the ophthalmic lens manufacturers use state of the art optimization algorithms to compensate the difference between the optometrist measurements of the lens optical characteristics in the exam room and the lens optical performance as perceived by the patient. These algorithms can be used to design single vision, bi-focal, and progressive lenses and usually compensate for differences in the oblique refraction caused by the frame pantoscopic and panoramic tilts and by the back vertex distance difference between the state in the refraction examination and the state of the fitted spectacle frame.

The panoramic tilt relative to the eyes of the patient may usually depend mostly on the design of the spectacles frame. Therefore, the panoramic tilt may be measured more easily in a sufficiently accurate manner. The pantoscopic tilt, however, depends considerably on the position of the spectacles frame when worn by the patient. This position may change from patient to patient, because each patient may have a different head proportions and/or structure and a different natural position of the head when looking to the horizon.

Known methods for measuring the pantoscopic tilt usually measure the tilt of the spectacles frame itself. This may enable a certain estimation of the pantoscopic tilt of the lens in front of the pupil, which sometimes may be not accurate enough. A more accurate measurement of the pantoscopic tilt of the lens in front of the pupil of the spectacles wearer may be required especially, for example, for production of bifocal or multi-focal lenses, where the change and/or progression of power along the lens should be highly accommodated to the wearer.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Figs. 1A and 1B are schematic top view and side view illustrations of spectacles;

Figs. 2A and 2B are schematic illustrations of a device for measuring the pantoscopic tilt of a lens installed in a frame according to embodiments of the present invention;

Figs. 3A and 3B are schematic illustrations of a measurement system for measuring the pantoscopic tilt of a lens installed in a frame according to embodiments of the present invention;

Figs. 4A, 4B and 4C are frontal view illustrations of a lens and the measurement method by the device according to embodiments of the present invention; and

Fig. 5 is a flowchart illustrating a method for measuring the pantoscopic tilt of a lens installed in a frame according to embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

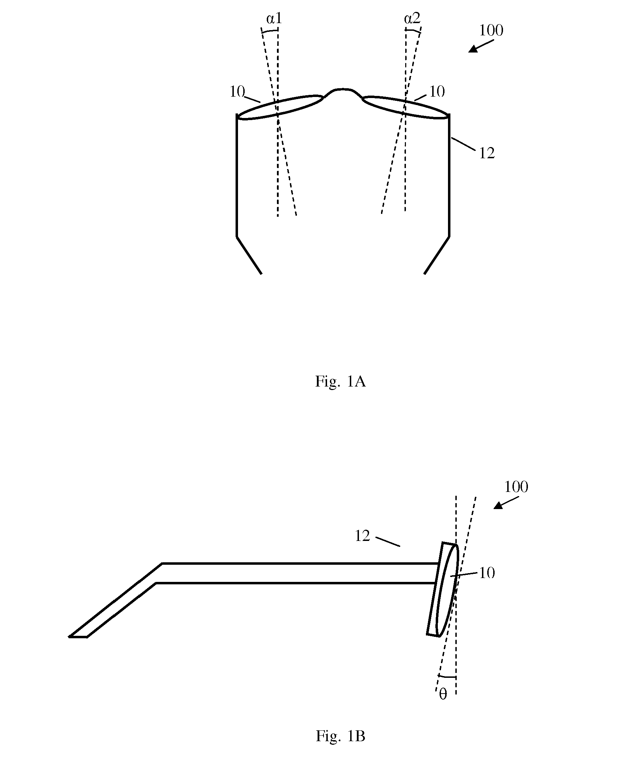

Reference is now made to Figs. 1A and 1B, which are schematic top view and side view illustrations of spectacles 100. Spectacles 100 may include lenses 10 and spectacles frame 12. Lens 10, when installed in frame 12, may have inclinations of the lenses relative to the potential wearer face. Such inclinations may include horizontal inclinations α, as shown in Fig. 1A, which are sometimes called panoramic tilts, and/or vertical inclinations θ, as shown in Fig. 1B, which are sometimes called pantoscopic tilts. Horizontal inclinations α may be measured in the horizontal plane perpendicular to the lens surface at the center of pupil point on the lens, i.e. at the point on the lens that should be located substantially opposite to the pupil when the wearer of the spectacles looks towards the horizon. Horizontal inclinations α may be measured relative to perpendicular line to the lens surface at the center of pupil point on the lens. Vertical inclinations θ may be measured in the vertical plane perpendicular to the lens surface at the center of pupil point on the lens that was defined above. Vertical inclinations θ may be measured relative to tangent line to the lens surface at the center of pupil point on the lens. The panoramic and pantoscopic tilts may affect the oblique refraction and/or the vertex distance of the lens and thus, for example, affect the lens and/or spectacles optical performance. Additionally, in lenses where the optical power changes along the lens, such as in bi-focal or multifocal lenses, the pantoscopic tilt may affect the accommodation of the power progression along the lens and/or the location of power regions along the lens to the potential wearer's needs, such as the convenient passage between long distance and short distance vision portions of the lens by rolling the eyeballs. In order to take these effects in consideration when manufacturing the lens, it may be beneficial to measure the expected tilt before manufacturing. Embodiments of the present invention may provide a device and method for measuring the pantoscopic tilt of a lens installed in a frame.

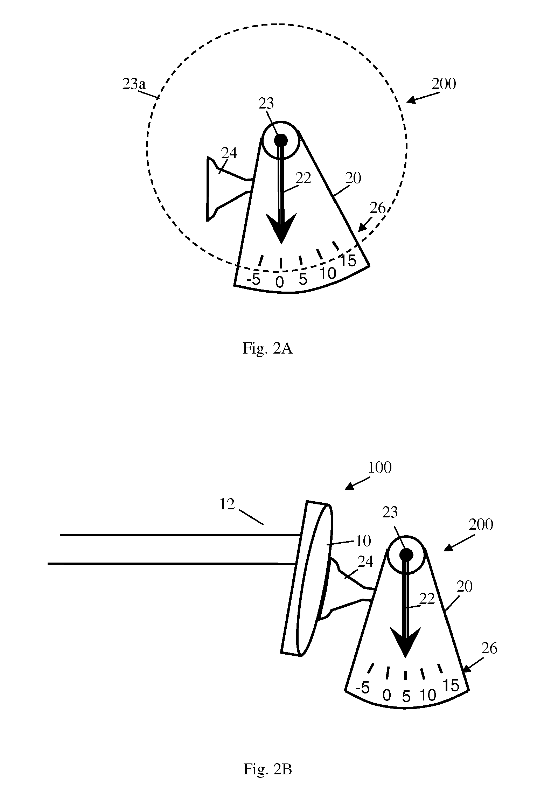

Reference is now made to Figs. 2A and 2B, which are schematic illustrations of a device 200 for measuring the pantoscopic tilt of a lens installed in a frame according to embodiments of the present invention. Measurement device 200 may include an orientation sensor 20 for measuring pantoscopic tilt and an attachment member 24. Pantoscopic tilt sensor 20 may include a pivot 23, a pointer 22 and a scale 26 for measuring an angle along an arc of an imaginary circle 23a. Scale 26 may show, for example, angle values, for example in degrees, radians and/or any other suitable measure. Pointer 22 may be freely rotatable about pivot 23 located at the center of the arc along which scale 26 is drawn (i.e. located at the center of imaginary circle 23a), so that when measurement device 200 is held upright, i.e. pivot 23 is substantially parallel to the ground, pointer 22 is pointing down, pulled by gravity. Attachment member 24 may have attachment capabilities to adhere to lens 10, as shown in Fig. 2B. For example, attachment member 24 may include a suction cup, a magnetic coupling, a sticker and/or any other suitable mounting and/or attachment structure. More specifically, attachment member 24 may have attachment capabilities to adhere to the center of pupil point on lens 10. Measurement device 200 should be relatively light-weight and/or may weight up to 5 grams in order to minimize the affect of measurement device 200 on the spectacles position when measurement device 200 in attached to lens 10.

In order to measure the panoscopic tilt of lens 10 at the center of pupil point on the lens, the wearer of spectacles 100 should look at the horizon in a natural position of the head, or spectacles 100 should be positioned as though it is worn by a person looking at the horizon in a natural position of the head. When spectacles 100 are in proper position, the optometrist (or other person performing the measurement) may identify the center of pupil point and attach measurement device 200 to the lens at the center of the pupil point. In some embodiments, for example in order to incur less interference in the measurement by the optometrist, the optometrist may mark the center of pupil point on lens 10 while spectacles 100 are worn, and then measurement device 200 may be attached to lens 10 at the marked center of pupil point after removing spectacles 100 from the patient, in an upright position, i.e. so that measurement device 200 would be substantially vertical and/or pivot 23 would be substantially parallel to the ground, when the spectacles are worn by the patient (i.e., so that imaginary circle 23a would be substantially perpendicular to the ground when the spectacles are worn by the patient). The patient may then wear the spectacles again in a natural position of the head for looking at the horizon, so that measurement device 200 may show the pantoscopic tilt measurement value by pointer 22, which may point at the measure of pantoscopic tilt on scale 26. Attaching device 200 to lens 10 while the spectacles are worn by the patient is also possible. However, the attaching action may cause the patient wearing spectacles 100 to move his head, for example to an un-natural position, and/or may cause spectacles 100 to change position on the patient's head, which may affect the measurement by device 200.

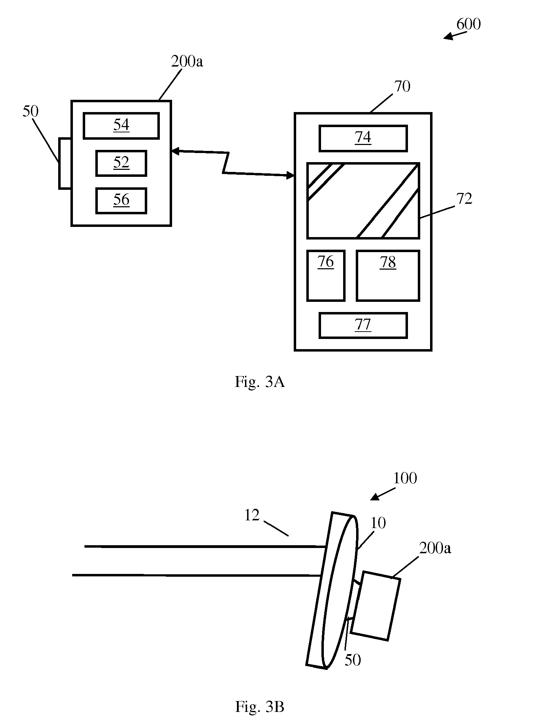

Reference is now made to Figs. 3A and 3B, which are schematic illustrations of a measurement system 600 for measuring the pantoscopic tilt of a lens installed in a frame according to embodiments of the present invention. System 600 may include a measurement transmitter device 200a and a receiver device 70. Measurement device 200a may include an electronic orientation sensor 52, transmitter 54, power source 56 and attachment member 50. Power source 56 may include an on-board electric power source such as a battery and/or may receive the power from an external source, for example from receiver device 70. Attachment member 50 may have attachment capabilities to adhere to lens 10, as shown in Fig. 3B. For example, attachment member 50 may include a suction cup, a magnetic coupling, a sticker and/or any other suitable mounting and/or attachment structure. More specifically, attachment member 50 may have attachment capabilities to adhere to the center of pupil point on lens 10. Measurement device 200a should be relatively light-weight and/or may weight up to 5 grams in order to minimize the affect of measurement device 200a on the spectacles position when measurement device 200a in attached to lens 10.

Orientation sensor 52 may sense data indicative of the orientation of device 200a relative to the ground. For example, orientation sensor 52 may include a gyroscope, an accelerometer and/or a magnetic sensor and/or any other suitable sensor to estimate/deduce the orientation of device 200a relative to the ground. Orientation sensor 52 may produce electric signals carrying the sensed data. Accordingly, when device 200a is attached to lens 10 at the center of pupil point, for example in a substantially leveled position relative to the ground, orientation sensor 52 may sense the pantoscopic tilt and produce a corresponding signal. Transmitter 54 may transmit the orientation sensor signals to an external receiver.

Receiver device 70 may include, for example, a receiver 74, a power source 77, a microprocessor 78 and memory 76. Receiver device 70 may receive signals from measurement transmitter device 200a. Microprocessor 78 may calculate pantoscopic tilt angle values based on the received signals. The pantoscopic tilt angle values may be presented on a display 72, for example in degrees, radians and/or any other suitable measure. Display 72 may be included in device 70 as shown in the fig. 3A or, in some embodiments of the present invention, display 72 may be included in a separate device connected to or otherwise communicating with receiver device 70.

Receiver 74 and transmitter 54 may communicate by any suitable wireless communication method and/or medium, such as, for example, RF communication, infrared communication, Wi-Fi (WLAN) communication, etc. However, in some embodiments of the present invention, receiver 74 and transmitter 54 may communicate by wired communication.

Similarly to the measurement with device 200 described above, in order to measure the panoscopic tilt of lens 10 at the center of pupil point on the lens, the wearer of spectacles 100 should look at the horizon in a natural position of the head, or spectacles 100 should be positioned as though it is worn by a person looking at the horizon in a natural position of the head. When spectacles 100 are in proper position, the optometrist (or other person performing the measurement) may identify the center of pupil point and attach measurement device 200a to the lens at the center of the pupil point. In some embodiments, for example in order to incur less interference in the measurement by the optometrist, the optometrist may mark the center of pupil point on lens 10 while spectacles 100 are worn, and then measurement device 200a may be attached to lens 10 at the marked center of pupil point after removing spectacles 100 from the patient. Device 200a may be attached in a substantially leveled position, i.e. so that measurement device 200a would be substantially leveled relative to the ground, when the spectacles are worn by the patient. The patient may then wear the spectacles again in a natural position of the head for looking at the horizon, so that sensor 52 may sense the pantoscopic tilt and produce a corresponding signal, which may be transmitted by transmitter 54 to receiver device 70. Attaching device 200a to lens 10 while the spectacles are worn by the patient is also possible. However, the attaching action may cause the patient wearing spectacles 100 to move his head, for example to an un-natural position, and/or may cause spectacles 100 to change position on the patient's head, which may affect the measurement by device 200a. Additionally, receiver device 70 may include a calibration device (not shown) that may determine the position of zero tilt, for example, manually, by, for example, a calibration button. Additionally, receiver device 70 70 may include an on/off button (not shown) or a similar element for turning receiver device 70 on or off.

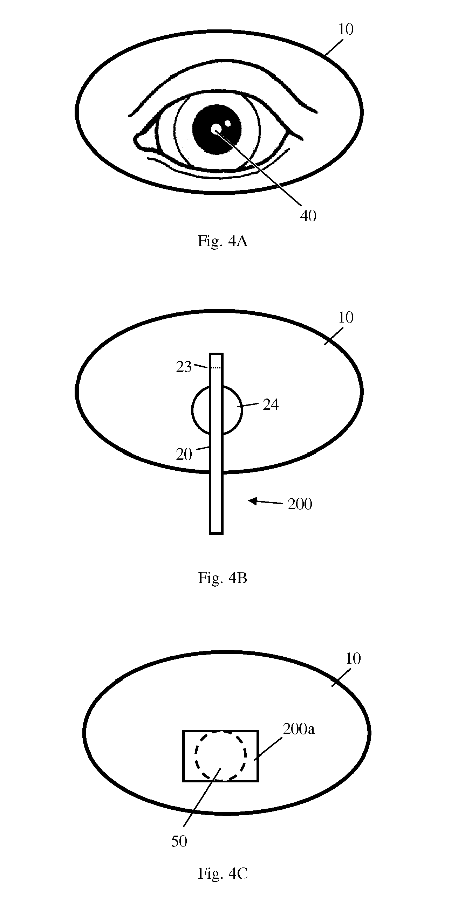

Reference is now made to Figs. 4A, 4B and 4C, which are frontal view illustrations of lens 10 and the measurement method by device 200 (Fig. 4B) or 200a (Fig. 4C) according to embodiments of the present invention. When a wearer of spectacles 100 looks at the horizon in natural position of the head, an optometrist may locate the center of pupil point 40 shown in Fig. 4A and mark the center of pupil point 40 with a marker on lens 10 in a visible manner.

For measuring by measurement device 200, as shown in Fig. 4B, measurement device 200 may be attached to lens 10 at the marked center of pupil point 40, for example after removing spectacles 100 from the patient as described in detail above. Measurement device 200 may be attached to lens 10 in an upright position, i.e. so that measurement device 200 is vertical and/or pivot 23 (which may go through device 200 as shown by the broken line) is substantially parallel to the ground, when the spectacles are worn by the patient. While the patient wear the spectacles in a natural position of the head for looking at the horizon, measurement device 200 may show the pantoscopic tilt measurement value by pointer 22, which may point at the measure of pantoscopic tilt on scale 26.

For measuring by measurement device 200a, as shown in Fig. 4C, measurement device 200a may be attached to lens 10 at the marked center of pupil point 40, for example after removing spectacles 100 from the patient as described in detail above. Measurement device 200a may be attached to lens 10, for example in a substantially leveled position relative to the ground, i.e. so that orientation sensor 52 may sense the pantoscopic tilt when the spectacles are worn by the patient. While the patient wear the spectacles in a natural position of the head for looking at the horizon, sensor 52 may sense the pantoscopic tilt and produce a corresponding signal, which may be sent by transmitter 54 to receiver device 70.

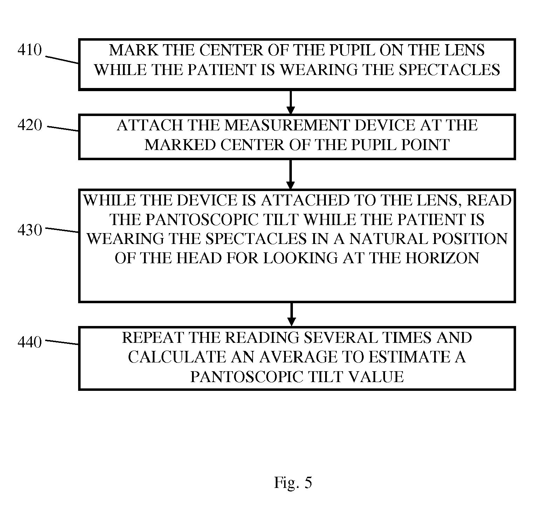

Reference is now made to Fig. 5, which is a flowchart illustrating a method for measuring the pantoscopic tilt of a lens installed in a frame according to embodiments of the present invention. As indicated in block 410, the method may include marking the center of the pupil on the lens while the patient is wearing the spectacles, as described in detail herein. As indicated in block 420, the method may include attaching the measurement device at the marked center of the pupil point. When using measurement device 200 as described above, device 200 may be attached so that the device is substantially perpendicular to the ground when the patient wears the spectacles, as described in detail herein. When using measurement device 200a as described above, measurement device 200a may be attached to lens 10, for example in a substantially leveled position relative to the ground, i.e. so that orientation sensor 52 may sense the pantoscopic tilt when the spectacles are worn by the patient. As indicated in block 430, the method may include, while the device is attached to the lens, reading the pantoscopic tilt value measured by the device from the device and/or from the receiver while the patient is wearing the spectacles in a natural position of the head for looking at the horizon, as described in detail herein.

The pantoscopic tilt measurement by device 200 or device 200a depends on many hard-to-control variables such as, for example, the exact position of the head and/or of the spectacles and/or of measurement device 200 or 200a at the time of reading of the pantoscopic tilt value. In order to obtain a more accurate value, the method for measuring the pantoscopic tilt according to embodiments of the present invention, as indicated in block 440, may include repeating the reading of the pantoscopic tilt measurement several times and calculating statistical parameters for the measurements such as, for example, average and/or standard deviation values, which may obviate random errors and therefore may be more accurate than a result of a single measurement. For example, for a repeated reading of the measurement value, the spectacles may be removed and worn again by the patient, and then the measurement value reading may be repeated. For another example, for a repeated reading of the measurement value, the spectacles may be removed from the patient, measurement device 200 or 200a may be detached and attached again to the lens, and then the spectacles may be worn again by the patient and the measurement value reading may be repeated.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A device for measuring the pantoscopic tilt of a lens installed in a frame, the device comprising:
an orientation sensor for measuring pantoscopic tilt; and
an attachment member to attach the device to a lens.

2. The device according to claim 1, wherein said orientation sensor comprises:
a scale for measuring an angle along an arc of a circle; and
a pointer freely rotatable about a pivot located at the center of the arc.

3. The device according to claim 1, wherein said orientation sensor is an electronic orientation sensor for sensing pantoscopic tilt and producing a corresponding electric signal, and wherein said device further comprising:
a transmitter for transmitting the produced signal; and
a power source.

4. The device according to claim 1, wherein said attachment member comprises at least one of a suction cup, a magnetic coupling and a sticker.

5. The device according to claim 1, wherein said attachment member have attachment capabilities to adhere to the center of pupil point on the lens.

6. A method for measuring the pantoscopic tilt of a lens installed in a frame, the method comprising:
marking a center of the pupil on a lens while a patient is wearing the spectacles;
attaching a measurement device at the marked center of the pupil point; and
while the device is attached to the lens, reading a pantoscopic tilt value measured by the device while the patient is wearing the spectacles in a natural position of the head for looking at the horizon.

7. The method according to claim 6, wherein said measurement device comprises an orientation sensor comprising:
a scale for measuring an angle along an arc of a circle; and
a pointer freely rotatable about a pivot located at the center of the arc,
and wherein the attaching is so that the device is substantially perpendicular to the ground when the patient wears the spectacles.

8. The method according to claim 6, wherein said measurement device comprises:
an electronic orientation sensor for sensing pantoscopic tilt and producing a corresponding electric signal;
a transmitter for transmitting the produced signal; and
a power source,
and wherein the attaching is so that the device is in leveled position relative to the ground when the patient wears the spectacles.

9. The method according to claim 6, further comprising repeating the reading of the pantoscopic tilt measurement several times and calculating statistical parameters for the measurements.

10. The method according to claim 6, wherein said attaching is by an attachment member that comprises at least one of a suction cup, a magnetic coupling and a sticker.
